# EUROPEAN PATENT APPLICATION

(11) **EP 4 442 661 A1**
(43) Date of publication of application: **09.10.2024**
(21) Application number: 22901420.4
(22) Date of filing: 01.12.2022
(51) Int. Cl.: C03C 13/00, D06M 15/19, D06M 101/00

(54) **GLASS FIBER**

(30) Priority: 02.12.2021 JP 2021196562
(71) Applicant: NIPPON SHEET GLASS COMPANY, LIMITED, Tokyo 108-6321 (JP)
(72) Inventor: NAKAMURA, Aya, Tokyo 108-6321 (JP); FUKUCHI, Hidetoshi, Tokyo 108-6321 (JP)
(74) Representative: Hasegawa, Kan
(86) International application number: PCT/JP2022/044460
(87) International publication number: WO 2023/100990

(57) **Abstract**

A glass fiber according to the present invention contains SiO₂ that forms a glass skeleton, Al₂O₃, and an elastic modulus adjustment component for improving the elastic modulus; and this glass fiber has acid resistance.

## Description

### TECHNICAL FIELD

The present invention relates to a glass fiber, a glass fiber material using the same, a resin-impregnated fiber sheet, a pipe, a concrete reinforcing material, and a high-voltage power transmission line protecting material.

### BACKGROUND ART

A glass fiber has a high elastic modulus and is thus used in various fields. For example, as shown in Patent Document 1, the glass fiber is sometimes used for regenerating existing pipes.

### PRIOR ART DOCUMENT

### PATENT DOCUMENT

Patent Document 1: Japanese Patent Laid-open Publication No. 2021-11904

### SUMMARY OF THE INVENTION

### PROBLEMS TO BE SOLVED BY THE INVENTION

However, since an acidic liquid may flow in such existing pipes, the glass fiber may be deteriorated when the acidic liquid comes into contact with the glass fiber. Such a problem may occur not only in the regeneration of the existing pipes but also in various environments where a high elastic modulus and acid resistance are required, and a higher elastic modulus and acid resistance performance have been demanded. The present invention has been made to solve this problem, and an object of the present invention is to provide a glass fiber capable of improving the elastic modulus of the glass fiber and having acid resistance, a glass fiber material using the same, a resin-impregnated fiber sheet, a pipe, a concrete reinforcing material, and a high-voltage power transmission line protecting material.

### MEANS FOR SOLVING THE PROBLEM

Item 1. A glass fiber comprising: SiO₂ that forms a glass skeleton; Al₂O₃; and an elastic modulus adjustment component for improving an elastic modulus of the glass fiber, and having acid resistance.

Item 2. The glass fiber according to item 1, in which a content of SiO₂ is 55 mol% or more.

Item 3. The glass fiber according to item 1 or 2, in which the elastic modulus adjustment component is MgO.

Item 4. The glass fiber according to item 1 or 2, in which the elastic modulus adjustment component is a rare earth compound.

Item 5. The glass fiber according to item 4, in which a content of the rare earth compound is 8 mol% or less.

Item 6. The glass fiber according to any one of items 1 to 5, further comprising ZrO₂.

Item 7. The glass fiber according to item 6, in which a content of ZrO₂ is 0.05 to 3 mol%.

Item 8. The glass fiber according to any one of items 1 to 7, in which an elastic modulus of the glass fiber is 90 GPa or more.

Item 9. The glass fiber according to any one of items 1 to 7, in which an elastic modulus of the glass fiber is 95 GPa or more.

Item 10. The glass fiber according to any one of items 1 to 7, in which an elastic modulus of the glass fiber is 100 GPa or more.

Item 11. The glass fiber according to any one of items 1 to 10, in which a weight reduction rate in acid resistance by a method in accordance with JOGIS J06-1999 is 40% by weight or less.

Item 12. A glass fiber material formed of the resin-reinforcing glass fiber according to any one of items 1 to 11 and having a form of any of a strand, a yarn and a roving.

Item 13. A resin-impregnated fiber sheet comprising:
the glass fiber material formed of a glass fiber according to any of items 1 to 11 and having a form of either a woven or nonwoven fabric; and
a resin with which the glass fiber material is impregnated.

Item 14. A pipe comprising the resin-impregnated fiber sheet according to item 13.

Item 15. A reinforcing material for concrete, comprising the resin-impregnated fiber sheet according to item 13.

Item 16. A high-voltage power transmission line protecting material comprising the resin-impregnated fiber sheet according to item 13.

### ADVANTAGES OF THE INVENTION

According to the present invention, it is possible to provide a glass fiber capable of improving the elastic modulus of the glass fiber and having acid resistance.

### BRIEF DESCRIPTION OF THE DRAWINGS

Fig. 1 is a graph showing a relationship between a SiO₂ content of a glass fiber and acid resistance performance.
Fig. 2 is a graph showing a relationship between the content of Y₂O₃ in a glass fiber, and the elastic modulus and acid resistance performance of the glass fiber.

### EMBODIMENTS OF THE INVENTION

An embodiment of a glass fiber according to the present invention will be described. The glass fiber according to the present invention contains at least SiO₂, Al₂O₃, and an elastic modulus adjustment component for improving the elastic modulus of the glass fiber. Details will be described below. Hereinafter, % indicating the content rate of a glass component is all mol% unless otherwise specified.

### <1. Components of glass fiber>

### <1-1. SiO₂>

SiO₂ is a main component of the glass fiber, that is, a component forming a glass skeleton, and the content rate thereof is set to, for example, the range of 55 to 70%. The content rate of SiO₂ is preferably 57% or more, more preferably 58% or more, and particularly preferably 62% or more. When the content of SiO₂ is too low, the acid resistance of the glass fiber may be deteriorated. Meanwhile, when the content rate of SiO₂ is too high, an elastic modulus (for example, Young's modulus) may be deteriorated. Therefore, the content rate of SiO₂ is preferably 67% or less, and more preferably 65% or less.

### < 1-2. Al₂O₃>

Al₂O₃ contributes to the maintenance of the heat resistance and water resistance and the like of a glass composition, and is also a component that affects the devitrification temperature and viscosity of the glass composition, and the like. The content rate of Al₂O₃ is set in the range of 7.5 to 26%. The content rate of Al₂O₃ is preferably 9% or more, more preferably 10% or more, and particularly preferably 11% or more. The content rate of Al₂O₃ may be 12% or more or even 14% or more in some cases. When the content rate of Al₂O₃ is too high, the liquid phase temperature of the glass composition is greatly increased, which may cause inconvenience in production. Therefore, the content rate of Al₂O₃ is preferably 24% or less, and more preferably 22% or less. The content rate of Al₂O₃ may be 20% or less or even 19% or less in some cases.

Particularly in consideration of mass production, the devitrification temperature of the glass composition is preferably sufficiently lower than the liquid phase temperature thereof. The content rate of Al₂O₃ suitable for sufficiently lowering the devitrification temperature below the liquid phase temperature is 11 to 15%, further 11 to 14%, and particularly 11.5 to 13.5%. As described later, in order to sufficiently lower the devitrification temperature as compared with the liquid phase temperature, an appropriate amount of Li₂O and/or B₂O₃ may be added.

### <1-3. Component for improving elastic modulus>

The glass fibers according to the present invention contain a component for improving the elastic modulus of the glass composition (elastic modulus adjustment component). Examples of such an elastic modulus adjustment component include an alkaline earth metal compound and a rare earth compound. Examples of the alkaline earth metal compound include MgO and CaO. Examples of the rare earth compound include Y₂O₃, La₂O₃, and CeO₂. As the elastic modulus adjustment component, at least one composition may be contained, and two or more compositions may be contained.

Hereinafter, description will be made.

### (MgO)

MgO is a component that contributes to improvement of the elastic modulus (for example, Young's modulus) and affects the devitrification temperature and the viscosity and the like. The content rate of MgO can be set to, for example, the range of 15 to 30%. The content rate of MgO is preferably 17% or more, more preferably 18% or more, and particularly preferably 20% or more. The content rate of MgO may be 21% or more or even 22% or less in some cases. When the content rate of MgO is too high, the liquid phase temperature may be greatly increased. Therefore, the content rate of MgO is preferably 29% or less. The content rate of MgO may be 28% or less or even 27% or less in some cases.

The content rate of MgO suitable for sufficiently lowering the devitrification temperature below the liquid phase temperature is 18 to 30%, and further 20 to 28%. The elastic modulus adjustment component preferably contains at least MgO.

### (CaO)

CaO is an optional component that contributes to the maintenance of water resistance and the like and that affects the devitrification temperature and the viscosity and the like, in addition to the adjustment of the elastic modulus (for example, Young's modulus). The content rate of CaO can be set to, for example, the range of 0 to 8%. It is preferable to add an appropriate amount of CaO from the viewpoint of lowering the liquid phase temperature. Therefore, CaO is preferably added (content rate: more than 0%), and the content rate thereof is preferably 0.1% or more, and more preferably 0.12% or more. The content rate may be 2% or more or even 3% or more in some cases. However, when the content rate of CaO is too high, the Young's modulus and acid resistance performance may be deteriorated. Therefore, the content rate of CaO is preferably 7% or less, and more preferably 5% or less. The content rate of CaO that is particularly suitable for improving the Young's modulus and the crack resistance load is less than 1%.

### (MgO/RO (Total amount of alkaline earth metal compound))

It was found that when the ratio of MgO/RO is improved, the acid resistance performance is improved. For example, MgO/RO is preferably 0.5 or more, and more preferably 0.7 or more.

### (Rare earth compound)

Examples of the rare earth compound include Y₂O₃, La₂O₃, and CeO₂ as described above. The content rate of the rare earth compound can be set to, for example, the range of 0 to 8%. The content rate of the rare earth compound is preferably 0.1% or more, more preferably 1% or more, and particularly preferably 3% or more. When the content rate of the rare earth compound is too high, the acid resistance is weakened, and the batch cost may be increased. Therefore, the content rate of the rare earth compound is preferably 8% or less, and more preferably 6% or less.

### <1-4. Other components>

In addition to the above components, the following components can be added to the glass fibers according to the present invention as necessary. However, the components to be added are not limited to the following components, and other components can be appropriately added.

### (ZrO₂)

ZrO₂ is a component for improving the acid resistance performance. The content rate of ZrO₂ can be set to, for example, the range of 0.1 to 3%. The content rate of ZrO₂ is preferably 0.1% or more, more preferably 0.3% or more, and particularly preferably 0.5% or more. When the content rate of ZrO₂ is too high, glass is easily crystallized, and as a result, devitrification may occur. Therefore, the content rate of ZrO₂ is preferably 3% or less, and more preferably 1.5% or less.

### (TiO₂)

TiO₂ is a component for improving the acid resistance performance. The content rate of TiO₂ can be set, for example, in the range of 0.1 to 3%. The content rate of TiO₂ is preferably 0.1 to 3% or more, more preferably 0.3% or more, and particularly preferably 0.5% or more. When the content of TiO₂ is too high, the uniformity of glass is lost, and devitrification may also occur in this case. Therefore, the content rate of TiO₂ is preferably 3% or less, and more preferably 1.5% or less.

### (B₂O₃)

B₂O₃ is an optional component that forms a glass backbone and affects properties such as the devitrification temperature and the viscosity. The content rate of B₂O₃ is set in the range of 0 to 3%. The addition of a trace amount of B₂O₃ may contribute to a decrease in the devitrification temperature. Therefore, B₂O₃ may be added (content rate: more than 0%), and the content rate of B₂O₃ to be added is preferably 0.1% or more, and particularly preferably 0.3% or more. The content rate may be 0.5% or more or even 0.7% or more in some cases. However, when the content rate of B₂O₃ is too high, the Young's modulus may be deteriorated. The content rate of B₂O₃ is preferably 2.5% or less, more preferably 2% or less, and particularly preferably 1.8% or less. The content rate may be 1.6% or less or even 1.5% or less in some cases. One of examples of the preferable range of the content rate of B₂O₃ is 0.1 to 1.6%.

### (Li₂O)

Li₂O is a component that modifies a glass backbone, and is an optional component that affects properties such as the liquid phase temperature, the devitrification temperature, and the viscosity. The content rate of Li₂O is set in the range of 0 to 3%. The addition of Li₂O in this range is effective in lowering the devitrification temperature. Therefore, Li₂O may be added (content rate: more than 0%), and the content rate of Li₂O to be added is preferably 0.1% or more, more preferably 0.2% or more, and particularly preferably 0.3% or more. The content rate may be 0.5% or more or even 0.7% or more in some cases. When the content rate of Li₂O is too high, the Young's modulus may be deteriorated. Therefore, the content rate of Li₂O is preferably 2.5% or less, more preferably 2% or less, and particularly preferably 1.8% or less. The content rate may be 1.6% or less and even 1.5% or less in some cases. One of examples of the preferable range of the content rate of Li₂O is 0.2 to 2.5%, which is higher than the content rate of Na₂O.

### (Na₂O)

Like Li₂O, Na₂O is an optional component that affects properties such as the liquid phase temperature, the devitrification temperature, and the viscosity. However, since Na₂O has a higher effect of lowering the Young's modulus than that of Li₂O, the content rate thereof is set in the range of 0 to 0.2%. It is desirable that Na₂O is basically not contained, but Na₂O is preferably added in the range of up to 0.2%, and more preferably up to 0.15%, for example, more than 0% and less than 0.1%, for refining a glass melt.

In the present specification, the content rate of the oxide of a transition element (ZrO₂, Y₂O₃, La₂O₃, or CeO₂ or the like) present with a plurality of valences in the glass fibers is calculated in terms of an oxide having the maximum oxidation number of the metal.

### (Total of components described above)

The total of the content rates of the components (SiO₂, Al₂O₃, elastic modulus adjustment component) described above is preferably 95% or more, more preferably 97% or more, particularly preferably 98% or more, and especially preferably 99% or more. The total of the content rates may be more than 99.5%, more than 99.9%, and even 100% in some cases.

### <2. Properties of glass fiber>

### <2-1. Elastic modulus>

In an embodiment of the present invention, the elastic modulus of each of the glass fibers can be measured by the Young's modulus. The Young's modulus is preferably 90 GPa or more, more preferably 95 GPa or more, and particularly preferably 100 GPa or more. The upper limit of the Young's modulus is not particularly limited, but may be 110 GPa or less. The Young's modulus is measured as follows as bulk glass having the same composition rather than the glass fiber.

The Young's modulus is measured according to an ultrasonic pulse method described in Japanese Industrial Standards (JIS) R 1602-1995. Each test piece is a rectangular parallelepiped of 5 mm × 25 mm × 35 mm. The measurement is performed at room temperature in the air, and a model 25DL Plus manufactured by Panametrics is used as a measuring apparatus.

It is known that when comparing glass fibers with bulk glass made of the same glass composition as that of the glass fibers, the glass fibers usually have a relatively low elastic modulus. This is believed to be due to the fact that when the glass fibers are molded from a glass melt, the glass fibers are cooled much more quickly. However, since there is a positive correlation between the elastic modulus of each of the glass fibers and the elastic modulus of the bulk glass (elastic modulus measured according to JIS described above), it is reasonable to evaluate the properties of the glass fibers or the glass composition that is used for the glass fibers using the values measured according to JIS.

### <2-2. Acid resistance performance>

In an embodiment of the present invention, the acid resistance performance of the glass fiber can be evaluated, for example, by a method in accordance with JOGIS J06-1999. For example, a specific gravity gram of pulverized glass fibers is placed in a platinum basket, immersed in 80 ml of a sulfuric acid solution having a specific gravity of 1.2 in a flask, heated at 99°C for 60 minutes, dried at 120°C, and then weighed, and the weight reduction rate is measured. The weight reduction rate is preferably 40% by weight or less, more preferably 25% by weight or less, more preferably 5% by weight or less, still more preferably 1% by weight or less, and particularly preferably 0.2% or less.

### <3. Method for producing glass fibers>

The glass fibers as described above are produced by allowing a glass melt having a controlled viscosity to flow out the glass melt from a nozzle and winding the continuous fibers by a winding machine. The continuous fibers are cut to an appropriate length in use. The short glass fibers are produced by blowing off the glass melt by high-pressure air or a centrifugal force or the like.

### <4. Glass fiber material>

The glass fiber according to the present invention can be applied to various forms of glass fiber materials. For example, a strand obtained by bundling a plurality of glass fibers can be formed. Each strand is composed of, for example, 100 to 10,000, and typically 200 to 4000 glass fibers. A chopped strand obtained by cutting the strand into a predetermined length can also be formed. The length of the chopped strand is not particularly limited, and may be, for example, 1 to 20 mm, preferably 1 to 11 mm, and more preferably 1 to 10 mm.

A plurality of glass fibers can also be twisted to form a yarn as a twisted yarn. Alternatively, a plurality of glass fibers can also be combined to form a roving. Furthermore, a woven fabric can be formed by a plurality of glass fibers. In this case, weaving methods such as plain weave, twill weave, leno weave, and braided fabric can be applied. Alternatively, a nonwoven fabric may be formed by a plurality of glass fibers. In addition, a mat having glass fibers randomly accumulated so as to have voids can be formed.

### <5. Resin-impregnated fiber sheet>

The glass fiber described above can be applied to a resin-impregnated fiber sheet. The resin-impregnated fiber sheet is a sheet in which a woven fabric, a nonwoven fabric, or a fiber bundle is formed of the glass fiber and is impregnated with a resin.

The resin with which the resin-impregnated fiber sheet is impregnated is not particularly limited, but for example, a thermosetting resin, a thermoplastic resin, or a photocurable resin can be used. Examples of the thermosetting resin include resins such as a urethane resin, a vinyl ester resin, and an epoxy resin. Examples of the thermoplastic resin include a polyethylene resin, a polypropylene resin, a polypropylene copolymer, a nylon resin, a polymethacrylic resin, a polyvinyl chloride resin, and a polycarbonate resin. Examples of the photocurable resin include an ultraviolet curable resin that is cured by irradiation with ultraviolet rays. As the resin with which the resin-impregnated fiber sheet is impregnated, these resins may be used alone, or a mixture of a plurality of kinds of resins may be used.

The thickness of the resin-impregnated fiber sheet is not particularly limited, but can be, for example, 1 to 10 mm.

In such a resin-impregnated fiber sheet, the Young's modulus of the sheet decreases when the content of the resin is large. Therefore, when such a sheet is used for a pipe or a high-voltage power transmission line protecting material to be described later, a crack may occur due to an acting load if the content of the resin is large. As a result, there is a possibility that water leakage in the pipe or power transmission failure occurs starting from the crack.

Meanwhile, when the content of the glass fiber increases, the glass fiber is easily exposed on the surface of the sheet. As a result, when the acid resistance of the glass fiber exposed on the surface is weak, the glass component dissolves, and the crack may occur therefrom. As a result, water leakage in the pipe or power transmission failure occurs starting from the crack. Therefore, the content of the resin in the resin-impregnated fiber sheet for such an application is preferably 1 to 10% by weight, and more preferably 2 to 5% by weight.

Such a resin-impregnated fiber sheet can be applied to a regeneration pipe for regenerating a pipe buried in the ground. For example, the resin-impregnated fiber sheet can also be used alone as the regeneration pipe, or can be used as one layer of a plurality of layers constituting the regeneration pipe. For example, a regeneration pipe in which a resin sheet that does not permeate a liquid is disposed so as to sandwich the resin-impregnated fiber sheet can be formed. A large load may act on the pipe and the regeneration pipe to be buried in the ground, and an acidic component may be contained in the liquid flowing through the pipe. Therefore, even if the glass fiber is exposed from the sheet, the glass fiber having a high elastic modulus and acid resistance as described above is particularly advantageous.

The resin-impregnated fiber sheet can be applied to a reinforcing material for concrete. The reinforcing material for concrete is a sheet containing the resin-impregnated fiber sheet as one layer, and is attached to the surface of the concrete. From the concrete, an acidic component or an alkaline component is eluted over time, and this may permeate the resin-impregnated fiber sheet. Therefore, even if the glass fiber is exposed from the sheet, it is advantageous to use the glass fiber having a high elastic modulus and acid resistance as described above for the reinforcing material for concrete.

The resin-impregnated fiber sheet can also be used as a high-voltage power transmission line protecting material. The high-voltage power transmission line protecting material covers the surface of the power transmission line, and is subject to the deflection of the power transmission line, so that a high elastic modulus is required. Since there is a possibility that the high-voltage power transmission line protecting material is affected by acid rain, acid resistance is also required. Therefore, it is advantageous to use the glass fiber having a high elastic modulus and acid resistance as described above for the high-voltage power transmission line protecting material. Such a high-voltage power transmission line is used as an overhead power transmission line, and may be buried in the ground. When the high-voltage power transmission line is buried in the ground, a stronger pressure from the soil is applied to the high-voltage power transmission line, and acid rain may permeate the ground. Therefore, even if the glass fiber is exposed from the protecting material, the glass fiber of the present invention is advantageous as a protecting material for the high-voltage power transmission line buried in the ground.

The glass fiber described above can also be applied to a linear member in addition to the resin-impregnated fiber sheet. For example, a linear rubber-reinforcing cord is used as a reinforcing material of a rubber product repeatedly subjected to bending stress, and the glass fiber can be used for such a cord. The rubber-reinforcing cord is embedded in a rubber product such as a rubber belt or a tire to suppress elongation and a decrease in strength of the rubber product, and contributes to the improvement of the dimensional stability of the rubber product and the prolongation of the fatigue life thereof. As a fiber for constituting the rubber-reinforcing cord, an aramid fiber, a carbon fiber, and a polyester fiber and the like are known, but the above-described glass fiber can be used. The rubber-reinforcing cord can be formed of a strand obtained by bundling a plurality of (for example, 100 to 2000, typically 200 to 600) glass fibers, and the rubber-reinforcing cord can be formed by impregnating the strand with a resin. In this case, the content of the resin may be the same as that of the above-described sheet, or may be about 30 to 60% by weight, and preferably about 40 to 50% by weight. Such a cord impregnated with the resin is advantageous because the glass fiber is not exposed on the surface, but the cord has acid resistance performance when the glass fiber is exposed.

### <6. Features>

As described above, the glass fiber according to the present invention has acid resistance because the glass skeleton is formed of SiO₂. Since the elastic modulus adjustment component is contained, a high elastic modulus can be achieved.

For example, by setting the content of SiO₂ to 55% or more, it is possible to further achieve acid resistance and a high elastic modulus. Meanwhile, by setting the content of the rare earth compound to 8% or less, it is possible to further achieve acid resistance and a high elastic modulus.

As described above, the specific gravity gram of the pulverized glass fiber is placed in a platinum basket, immersed in 80 ml of a sulfuric acid solution having a specific gravity of 1.2 in a flask, heated at 99°C for 60 minutes, dried at 120°C, and then weighed, and as a result, the weight reduction rate is 0.2% or less, so that acid resistance and a high elastic modulus can be achieved.

As described above, by using the resin-impregnated fiber sheet containing the glass fiber of the present invention for the pipe, the occurrence of breakage and water leakage due to the crack can be prevented.

### EXAMPLES

Hereinafter, Examples of the present invention will be described. However, the present invention is not limited to the following Examples.

### < 1. Evaluation 1>

Glass fibers having compositions shown in Table 1 were prepared, and the Young's modulus (bulk elastic modulus) and acid resistance performance (weight reduction rate or simply "acid resistance") of each of the glass fibers were evaluated. The unit of the composition shown in Tables 1 to 3 below is mol%, the unit of the Young's modulus is GPa, and the unit of the weight reduction rate (or acid resistance) is % by weight.

**[Table 1]**

| | Example 1 | Example 2 | Example 3 |
|---|---|---|---|
| SiO2 | 57.50 | 60.00 | 62.00 |
| ZrO2 | - | 1.00 | - |
| Al2O3 | 12.50 | 12.00 | 12.50 |
| B2O3 | 1.00 | 1.00 | - |
| MgO | 24.00 | 25.00 | 20.50 |
| CaO | 4.00 | - | - |
| Y2O3 | - | - | 5.00 |
| Young's modulus (GPa) | 100 | 100.8 | 104 |
| Acid resistance (weight reduction rate) | 0.31 | 0.02 | 0.11 |

According to Table 1, it was found that the acid resistance performance is improved when the content of SiO₂ is large. Since all of Examples contain an elastic modulus adjustment component (MgO or Y₂O₃ or the like), the Young's modulus is high.

### <2. Evaluation 2>

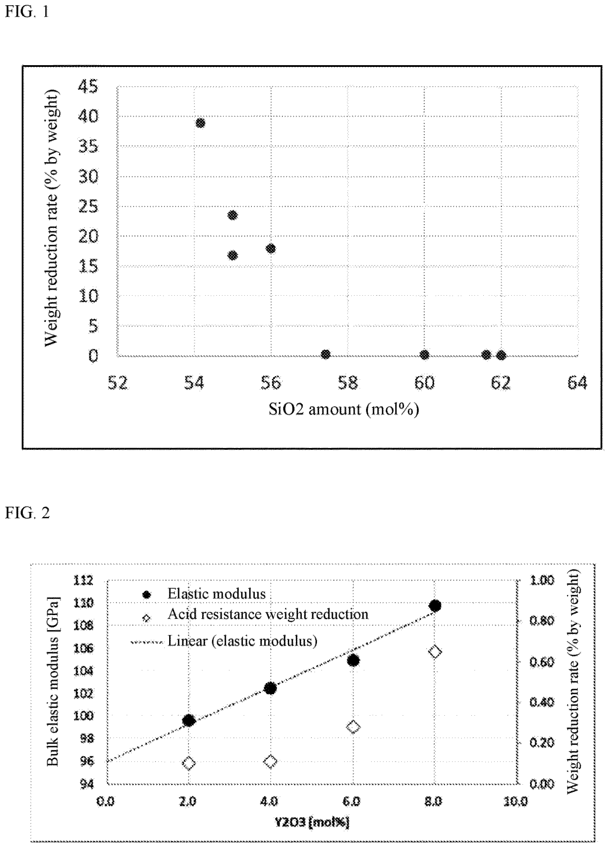

Glass fibers having compositions shown in Table 2 were prepared, and the acid resistance performance (weight reduction rate) of each of the glass fibers were evaluated. The results are as shown in Fig. 1 and Table 2. Examples 4 to 12 show plots arranged in order from left to right in Fig. 1. However, in both Example 5 and Example 6, the content of SiO₂ is 55.00%, but in Fig. 1, Example 6 has higher acid resistance performance.

**[Table 2]**

| | Example 4 | Example 5 | Example 6 | Example 7 | Example 8 | Example 9 | Example 10 | Example 11 | Example 12 |
|---|---|---|---|---|---|---|---|---|---|
| SiO2 | 54.16 | 55.00 | 55.00 | 56.00 | 57.43 | 60.00 | 61.62 | 62.00 | 62.00 |
| Al2O3 | 14.37 | 12.50 | 12.50 | 12.50 | 12.48 | 14.00 | 12.52 | 12.50 | 12.50 |
| B2O3 | 0.00 | 0.00 | 0.00 | 0.00 | 1.00 | 1.00 | 0.00 | 0.00 | 0.00 |
| MgO | 19.77 | 25.50 | 27.50 | 24.50 | 23.97 | 24.00 | 17.42 | 21.50 | 23.50 |
| CaO | 5.10 | 4.00 | 4.00 | 4.00 | 3.99 | 0.00 | 2.28 | 0.00 | 0.00 |
| Li2O | 4.71 | 1.00 | 1.00 | 1.00 | 1.00 | 1.00 | 4.27 | 0.00 | 0.00 |
| Na2O | 0.00 | 0.10 | 0.10 | 0.10 | 0.10 | 0.00 | 0.00 | 0.00 | 0.00 |
| K2O | 0.00 | 0.10 | 0.10 | 0.10 | 0.00 | 0.00 | 0.00 | 0.00 | 0.00 |
| Fe2O3 | 0.00 | 0.10 | 0.10 | 0.10 | 0.02 | 0.00 | 0.00 | 0.00 | 0.00 |
| Y2O3 | 1.55 | 2.00 | 0.00 | 2.00 | 0.00 | 0.00 | 1.70 | 4.00 | 2.00 |
| La2O3 | 0.29 | 0.00 | 0.00 | 0.00 | 0.00 | 0.00 | 0.20 | 0.00 | 0.00 |
| Acid resistance | 38.94 | 23.5 | 16.77 | 17.88 | 0.31 | 0.20 | 0.14 | 0.11 | 0.10 |

According to Fig. 1 and Table 2, it was found that the acid resistance performance is improved when the content of SiO₂ is large. In particular, it was found that the acid resistance performance is significantly improved when the content of SiO₂ is 57% or more. In Examples 8 to 12, the weight reduction rate was 0.2% or less. Although the acid used in this test is concentrated sulfuric acid, it is considered that when the acidity of the liquid used in the test decreases, sufficient acid resistance performance can be exhibited even if the content of SiO₂ is low. In particular, in general applications, acid resistance to highly acidic liquids such as concentrated sulfuric acid is not required. Therefore, it is considered that sufficient acid resistance is provided when the content of SiO₂ is 55% or more. It was also found that the acid resistance performance is improved by the decrease in Al₂O₃. For example, when Example 4 is compared with Example 5, the content of SiO₂ slightly increases in Example 5 as compared with Example 4, but the content of Al₂O₃ decreases, so that the acid resistance performance is improved. Meanwhile, it is also found that the content of Y₂O₃ does not affect the acid resistance performance as long as it is a content shown in Table 2. For example, the content of SiO₂ is the same in Example 11 and Example 12, but the content of Y₂O₃ is larger in Example 11. However, the acid resistance performance of Example 11 is the same as that of Example 12.

### <3. Evaluation 3>

Glass fibers having compositions shown in Table 3 were prepared, and the Young's modulus (elastic modulus of bulk glass) and acid resistance performance (weight reduction rate) of each of the glass fibers were evaluated. The results are as shown in Fig. 2. Examples 13 to 16 show plots arranged in order from left to right in Fig. 2.

**[Table 3]**

| | Example 13 | Example 14 | Example 15 | Example 16 |
|---|---|---|---|---|
| SiO2 | 62.00 | 62.00 | 62.00 | 62.00 |
| Al2O3 | 12.50 | 12.50 | 12.50 | 12.50 |
| B2O3 | 0.00 | 0.00 | 0.00 | 0.00 |
| MgO | 23.50 | 21.50 | 19.50 | 17.50 |
| CaO | 0.00 | 0.00 | 0.00 | 0.00 |
| Li2O | 0.00 | 0.00 | 0.00 | 0.00 |
| Y2O3 | 2.00 | 4.00 | 6.00 | 8.00 |
| Weight reduction rate | 0.12 | 0.12 | 0.28 | 0.65 |

According to Table 3 and Fig. 2, it was found that the Young's modulus (elastic modulus) is improved as the content of Y₂O₃ increases although the content of MgO decreases. It was found that when the content of Y₂O₃ is lower than 6 mol% (20% by weight), the acid resistance performance is suppressed to be low, but when the content of Y₂O₃ is 6 mol% (20% by weight) or more, the acid resistance performance is deteriorated.

## Claims

1. A glass fiber comprising:
SiO₂ that forms a glass skeleton;
Al₂O₃; and
an elastic modulus adjustment component for improving an elastic modulus of the glass fiber,
wherein the glass fiber has acid resistance.

2. The glass fiber according to claim 1, wherein a content of SiO₂ is 55 mol% or more.

3. The glass fiber according to claim 1 or 2, wherein the elastic modulus adjustment component is MgO.

4. The glass fiber according to any one of claims 1 to 3, wherein the elastic modulus adjustment component is a rare earth compound.

5. The glass fiber according to claim 4, wherein a content of the rare earth compound is 8 mol% or less.

6. The glass fiber according to any one of claims 1 to 5, further comprising ZrO₂.

7. The glass fiber according to claim 6, wherein a content of ZrO₂ is 0.05 to 3 mol%.

8. The glass fiber according to any one of claims 1 to 7, wherein an elastic modulus of the glass fiber is 90 GPa or more.

9. The glass fiber according to any one of claims 1 to 7, wherein an elastic modulus of the glass fiber is 95 GPa or more.

10. The glass fiber according to any one of claims 1 to 7, wherein an elastic modulus of the glass fiber is 100 GPa or more.

11. The glass fiber according to any one of claims 1 to 10, wherein a weight reduction rate in acid resistance by a method in accordance with JOGIS J06-1999 is 40% by weight or less.

12. A glass fiber material formed of the glass fiber according to any one of claims 1 to 11 and having a form of any of a strand, a chopped strand, a yarn and a roving.

13. A resin-impregnated fiber sheet comprising:
the glass fiber material formed of a glass fiber according to any of claims 1 to 11 and having a form of either a woven or nonwoven fabric; and
a resin with which the glass fiber material is impregnated.

14. A pipe comprising the resin-impregnated fiber sheet according to claim 13.

15. A reinforcing material for concrete, comprising the resin-impregnated fiber sheet according to claim 13.

16. A high-voltage power transmission line protecting material comprising the resin-impregnated fiber sheet according to claim 13.
